# FASCICULE DE BREVET EUROPEEN

(11) **EP 0 870 729 B1**
(45) Date de publication et mention de la délivrance du brevet: **26.07.2006**
(21) Numéro de dépôt: 98400693.2
(22) Date de dépôt: 25.03.1998
(51) Int. Cl.: C01C 1/02, C01B 7/07, C01B 7/19

(54) **Procédé et dispositif pour la réalisation de produits chimiques de haute pureté pour l'industrie micro-électronique**
Verfahren und Vorrichtung für die Herstellung chemischer Produkte hoher Reinheit für die Mikroelektronikindustrie
Process and device for producing chemical products of high purity for the microelectronic industry

(30) Priorité: 11.04.1997 FR 9704499
(43) Date de publication de la demande: 14.10.1998
(73) Titulaire: Air Liquide Electronics Systems, 75007 Paris (FR)
(72) Inventeur: Laederich, Thierry, 38800 Le Pont De Claix (FR); Dulphy, Hervé, 38800 Le Pont De Claix (FR)
(74) Mandataire: Vesin, Jacques

(56) Documents cités:
- EP-A- 0 210 480
- DD-A- 83 754
- US-A- 4 349 524
- US-A- 5 496 778

## Description

La présente invention concerne un procédé et un dispositif pour la réalisation de produits chimiques de haute pureté pour l'industrie micro-électronique, par dissolution d'au moins un gaz chimique dans de l'eau ultrapure.

Pour la production de produits chimiques ultrapurs comme l'ammoniaque, l'acide chlorhydrique, et l'acide fluorhydrique, il est connu d'utiliser respectivement du gaz ammoniac anhydre, du chlorure d'hydrogène gazeux, du fluorure d'hydrogène gazeux, de qualité « industrielle », et de les purifier, en particulier de leurs impuretés métalliques par un lavage sur une colonne garnie avec une solution saturée du même gaz dans de l'eau désionisée de haute pureté. Une technique de ce type est par exemple décrite dans la demande de brevet WO 96/39265.

La technologie décrite dans la demande de brevet précitée qui a marqué un important pas en avant pour permettre de fournir sur le site de production des circuits intégrés, les produits chimiques ultrapurs qui permettent de fabriquer ces circuits intégrés de plus en plus petits, présente cependant encore un certain nombre d'inconvénients lorsque l'on réalise l'exploitation d'un système correspondant sur le site d'un client, par exemple, une usine de fabrication de circuits intégrés (« wafer fab »).

Un premier problème rencontré concerne la dissolution du gaz qui se fait, selon la technologie décrite dans ce brevet, par injection directe dans l'eau. Il en résulte une élévation de température et il peut en résulter de brusques variations de pression dues à une agitation intense du liquide. En outre, la dissolution du gaz dans l'eau n'étant pas instantanée, ceci génère des remous dans le réservoir de liquide, ce qui a pour conséquence que la mesure du titre de la solution n'est pas toujours entièrement correcte.

Un autre inconvénient du procédé décrit dans ce brevet, est le fonctionnement non continu de celui-ci, ce qui nécessite, lorsque l'on atteint le titre voulu ou la concentration voulue, de transférer le contenu du récipient de produits, dans une cuve de stockage (procédé dit « batch »). En outre, l'utilisation d'un échangeur de chaleur tel que décrit dans cette demande de brevet peut éventuellement poser un problème de raccordement de l'échangeur de chaleur dans le récipient de produit réalisé, au contact du liquide de refroidissement ce qui peut être une source de pollution.

Enfin, du fait de l'efficacité toujours limitée d'un dévisiculeur placé en tête de colonne garnie, il est possible dans certains cas qu'un aérosol d'une solution du liquide de lavage avec le gaz purifié, puisse dans certains cas traverser ce dévisiculeur d' où un niveau de pureté du gaz qui peut être limité.

L'invention permet d'éviter ces inconvénients. A cet effet, le procédé et dispositif selon l'invention sont essentiellement caractérisés par le lavage du gaz avant dissolution dans au moins deux colonnes de lavages disposées en série, de préférence munies de garnissages ainsi que par l'utilisation d'une colonne garnie pour dissoudre le gaz dans l'eau.

La présente invention s'applique à la réalisation de produits chimiques liquides ultrapurs tels que l'ammoniaque, l'acide chlorhydrique et l'acide fluorhydrique mais également tous les autres produits chimiques de ce type que l'on peut obtenir sous forme initiale gazeuse, de préférence à partir d'une phase liquide.

D'une manière préférentielle, on partira d'un produit chimique sous forme liquide mais anhydre tel que, par exemple, l'ammoniac anhydre sous forme liquide (par exemple à une pression d'environ 5 bar et à température ambiante) de manière à pouvoir par vaporisation du produit récupérer une vapeur de laquelle sont déjà éliminées un certain nombre d'impuretés, d'une manière déjà décrite dans le brevet US 5,496,778. Ensuite, dans une première étape, le gaz ainsi obtenu, en général après vaporisation du produit chimique stocké sous forme liquide, est tout d'abord lavé puis, dans une second étape, dissout dans de l'eau ultrapure désionisée.

En ce qui concerne l'étape du lavage du gaz, on utilisera tout type de surfaces, telles que des plateaux mais, de préférence, on utilisera des garnissages. Comme dans les colonnes de distillation, ces surfaces ont pour but d'augmenter le contact liquide/gaz de manière à augmenter l'échange entre les deux matières liquide et gaz. S'agissant de garnissages, on utilisera par exemple des anneaux de Rashig, des anneaux de Pall, etc... Le but de ces surfaces est de multiplier la surface de contact entre liquide et gaz et, selon l'invention, le but est de multiplier de préférence cette surface de contact par une valeur égale ou supérieure à 4. Multiplier la surface de contact signifie en règle générale, augmenter la surface de contact par rapport à la surface latérale de la colonne non garnie (puisque en l'absence de garnissage dans une colonne, le contact entre liquide et gaz se fait essentiellement sur la surface latéral de cette colonne). Ainsi multiplier la surface de contact par quatre signifie placer une quantité d'anneaux de Rashig (ou toute autre surface) dont la surface totale de contact est égale à trois fois la surface latérale de la colonne. De préférence cependant, on multipliera cette surface de contact par une valeur d'au moins 10. En pratique, on utilisera des anneaux de Rashig en matériau plastique et on choisira une matière plastique résistant au produit chimique que l'on désire réaliser tel que l'ammoniaque, l'acide fluorhydrique, l'acide chlorhydrique, etc... Parmi les matériaux plastiques appropriés, les polyoléfines conviennent en général et de préférence le polyéthylène et/ou le polypropylène, substitués ou non ainsi que leurs copolymères. Conviennent en général également les produits commercialisés par la société DuPont de Nemours sous la dénomination « PFA » ou encore perfluoroalcoxy, ainsi que tout type de polytétrafluoroéthylène, éventuellement substitué, leurs copolymères, etc... tous ces matériaux étant appropriés lorsqu'ils n'engendrent pas, au contact des produits chimiques utilisés, des résidus en particulier des résidus du type éléments métalliques qui sont les principaux éléments qu'il est important d'éliminer de ces produits chimiques ultrapurs destinés à l'industrie des semi-conducteurs.

Dans cette étape de lavage du gaz, ainsi que dans l'étape ultérieure de dissolution, le débit de gaz chimique à laver puis à diluer est de préférence inférieur à 60M³ par heure et de préférence compris entre 30 et 45M³ par heure, tandis que la pression de ce gaz sera de préférence comprise entre environ 1 et 3 bar en valeur absolue (environ 0 à 2 bar en valeur relative).

Le volume de garnissage minimum (anneaux de Rashig ou Pall) que l'on utilisera de préférence dans l'ensemble des 2 ou 3 colonnes de lavage sera d'au moins 20 litres et de préférence d'au moins 40 litres. Le débit de la solution de lavage sera de préférence d'au moins 5 litres par minute avec une vidange en fond de cuve de colonne d'environ 1 litre par heure.

En ce qui concerne l'étape suivante de dissolution du gaz purifié dans l'eau ultrapure désionisée, on utilisera de préférence une seule colonne sans dévisiculeur, le volume de garnissage étant d'au moins un litre, et de préférence d'au moins 2,5 litres et plus préférentiellement au moins 4 litres, avec un débit de solution de dissolution, c'est à dire en général d'eau désionisée ultrapure, suffisamment fort pour éviter un échauffement de la colonne, de manière à maintenir la température de cette colonne dans laquelle se produit la dissolution du gaz, inférieure de préférence à 30°C et plus préférentiellement de manière à maintenir la température de cette colonne à une température voisine de la température ambiante, c'est à dire d'une manière générale entre 20°C et 25°C.

Le réservoir contenant le liquide chimique ayant en fin d'opération le titre voulu, est généralement situé en dessous de cette colonne de dissolution du gaz et l'on introduit d'une manière générale, le gaz à la base de la colonne en empêchant ce gaz d'aller directement au contact du liquide chimique dans le réservoir par tout moyen adapté tel que par exemple un tube en U, une spirale, etc... tout en maintenant une pression au sommet de la colonne sensiblement égale à celle au dessus du liquide dans le réservoir de manière à empêcher le passage du gaz à travers ce tube en U ou cette spirale. De cette manière, le gaz suit un chemin forcé vers le haut de la colonne de manière à favoriser l'échange liquide/gaz et réaliser la dissolution souhaitée.

Le procédé selon l'invention est conforme à la revendication 1.

Selon l'invention, l'étape de purification du gaz avant dissolution se fait dans au moins deux colonnes successives, placées en série, le contenue de la partie basse de la cuve de la première colonne (qui reçoit le gaz venant du réservoir) étant purgée régulièrement compte tenu des impuretés qui s'y accumulent et remplacé par le contenu de la cuve de la colonne suivante (et ainsi de suite s'il y a plusieurs colonnes), ce contenu ayant beaucoup moins d'impuretés puisque résultant d'un second lavage du gaz. Ceci évite d'une part, une perte de gaz (car le liquide est déjà saturé en gaz contrairement à ce qui se passerait si l'on remplaçait le liquide de cuve par de l'eau propre) et d'autre part, permet de gagner du temps, puisque le gaz est directement épuré par une solution déjà saturée.

L'invention sera mieux comprise à l'aide des exemples de réalisation suivants donnés à titre non limitatif, conjointement avec les figures qui représentent :
la figure 1, un schéma de dissolution du gaz dans de l'eau avec une colonne;
la figure 2, une boucle d'alimentation de l'échangeur thermique d'absorption;
la figure 3, un schéma de dissolution en continu du gaz dans le liquide;
la figure 4, un schéma de purification à trois colonnes;
la figure 5, un schéma de purification à deux colonnes.
La figure 6, un schéma global de l'appareil avec ses différentes fonctions.

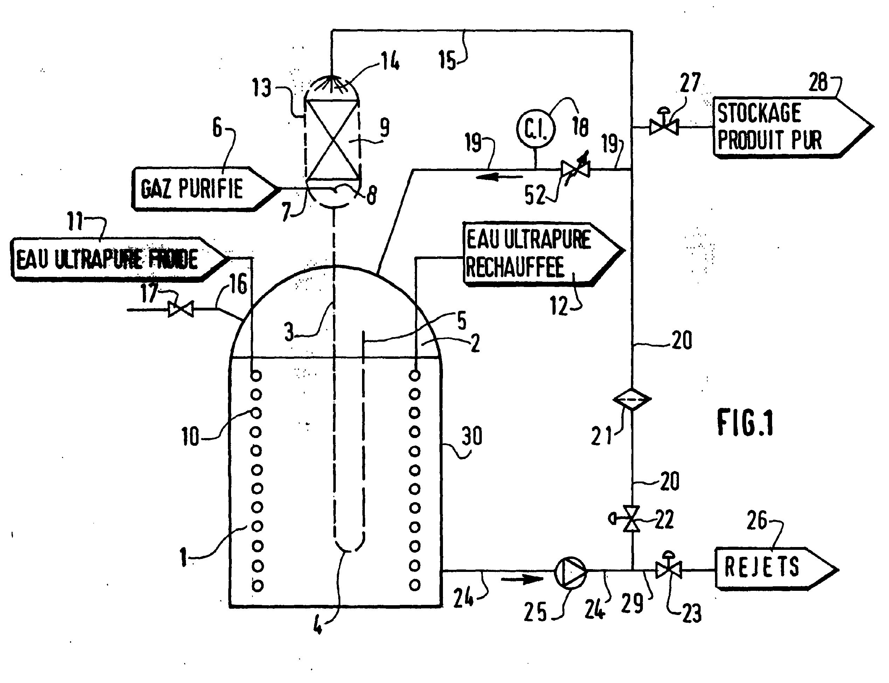

Sur la figure 1 est représenté un exemple de réalisation selon l'invention pour préparer un produit chimique liquide ultrapur de façon discontinue (batch). Le gaz purifié (6) en provenance de la source de gaz purifié ainsi qu'il sera décrit par la suite est injecté via la canalisation (7) et la buse (8) dans la colonne (13) munie de garnissages (9). La partie inférieure de la colonne (13) est munie d'une canalisation (3) qui pénètre dans le liquide (1) contenu dans le récipient (30) dans lequel ce liquide chimique ultrapur est produit, cette canalisation (3) se poursuivant par une extrémité (4) en forme du U qui monte et débouche en (5) au dessus du niveau de liquide dans une zone (2) de gaz, en général d'azote ultrapur (dont le mode d'alimentation n'est pas représenté sur la figure). Le récipient (30) comporte également une canalisation d'amenée d'eau désionisée ultrapure (16) contrôlée par une vanne (17). A l'intérieur de ce récipient, se trouve un échangeur thermique (10) permettant de maintenir la température du bain sensiblement constante de préférence entre 20 et 25°C. Cet échangeur est selon une variante préférentielle de l'invention, un échangeur en matière plastique comprenant un circuit primaire et un circuit secondaire d'un type similaire aux circuits de refroidissement utilisés habituellement dans l'industrie nucléaire. Il est représenté sur la figure 1 sous la forme d'un serpentin qui s'enroule le long de la paroi interne du récipient (30), il est alimenté d'un côté par de l'eau ultrapure froide (11) qui est après réchauffement, évacuée en tant qu'eau ultrapure réchauffée (12). Sur la partie inférieure du récipient (30) se trouve un canalisation (24) permettant de prélever le produit chimique ultrapur et de le faire circuler dans le système grâce à la pompe (25), la canalisation (24) se divisant ensuite en deux branches, une première branche (29) reliée par une vanne (23) à l'évacuation des rejets (26) et une branche (20) qui comporte une vanne (22) puis un filtre (21), cette canalisation (20) se séparant également en trois canalisations, la première (19) sur laquelle est connectée une vanne (32) de réglage des débits, un appareil de mesure de la concentration du titre de la solution (18), la canalisation (19) retournant dans la partie supérieure du conteneur (30) afin de retourner le produit chimique en excès dans la cuve (30), une seconde canalisation (15) dont l'extrémité se termine par une douchette (14) au sommet de la colonne (13) et qui vient arroser le gaz purifié (6) à contre-courant de celui-ci dans les garnissages (9), et enfin une troisième canalisation (31) reliée par l'intermédiaire de la vanne (27) au stockage (28) de produit pur. L'eau désionisée qui se charge e, gaz purifié au niveau des garnissages (9) s'écoule dans la canalisation (3) et vient remplir le récipient (30) par l'intermédiaire du trop plein (5). Le gaz purifié (6) qui ne peut s'écouler par l'intermédiaire de cette canalisation (3) remplie de liquide, est donc forcé vers la partie supérieure de la colonne ce qui favorise l'échange liquide/gaz au niveau des garnissages (9). Par l'intermédiaire de la pompe (25) on assure la circulation du produit via la canalisation (20) puis la canalisation (15) en circuit fermé, une partie du produit liquide ainsi formé étant dérivée dans la canalisation (19) et sa concentration (ou son titre) étant mesurée par un appareil de mesure de concentration (18) de manière à comparer la valeur mesurée à la valeur désirée. Lorsque la concentration voulue a été obtenue, un signal est engendré par l'appareil de mesure de la concentration (18) vers un automate de contrôle (non représenté sur la figure) de l'ensemble de l'appareil décrit sur la figure 1 qui stoppe la pompe de circulation, le produit étant alors prêt à être déchargé par l'intermédiaire de la canalisation (24) la canalisation (20) et la canalisation (31) vers le stockage de produit pur (28). Lorsque le réservoir (30) a été vidé, on le remplit de nouveau à l'aide de la quantité voulue d'eau désionisée grâce à la canalisation (16) et la vanne(17) puis on recommence la circulation du produit dans le circuit décrit précédemment de manière à progressivement diluer le gaz purifié dans l'eau et obtenir le titre voulu.

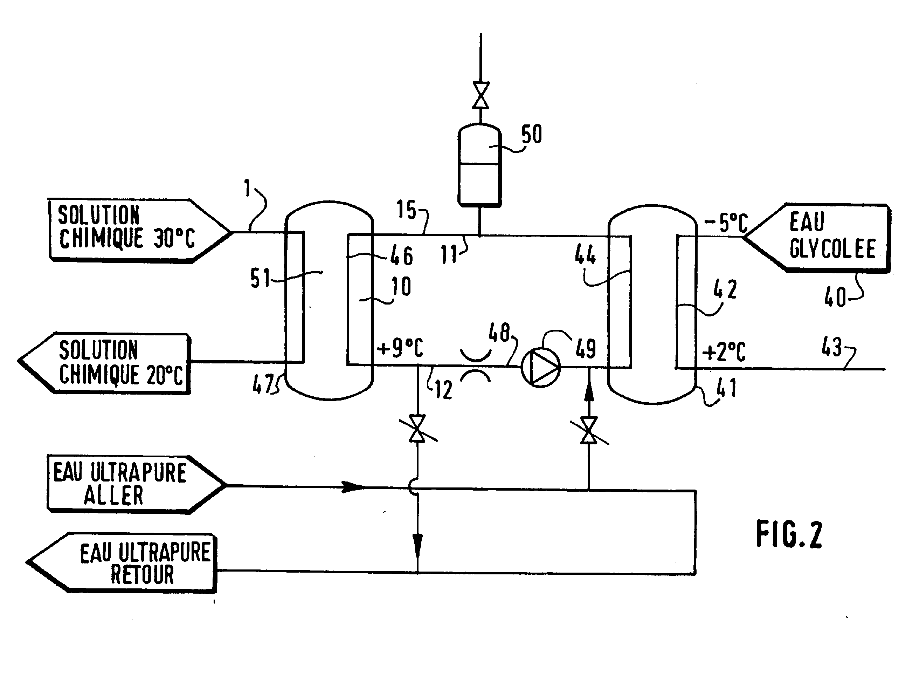

La figure 2 représente très schématiquement une boucle d'alimentation de l'échangeur thermique (10) de la figure 1, échangeur préférentiellement du type utilisé dans l'industrie nucléaire, c'est à dire, avec un circuit primaire, un circuit secondaire totalement étanches et séparés l'un de l'autre de manière à éviter toute contamination du produit liquide à fabriquer (produit liquide ultrapur pour l'industrie micro-électronique) par l'eau de refroidissement du récipient (30). Sur cette figure, les mêmes éléments que ceux de la figure 1 portent les mêmes références. Un réservoir d'eau glycolée (40) par exemple à une température de -5°C et circulé dans l'échangeur primaire (41), dans le circuit primaire (42) de celui-ci de manière à être ensuite évacuée via la canalisation (43) à une température qui peut être en pratique de +2°C. La partie secondaire (44) de l'échangeur primaire (41) comporte un circuit d'eau ultrapure qui s'écoule en permanence dans le secondaire de cet échangeur primaire, dans la canalisation (45) reliée au circuit primaire (46) de l'échangeur secondaire (47), l'extrémité inférieure de cet échangeur secondaire (46) étant reliée à la canalisation (48) puis à la pompe (49) qui fait circuler cette eau ultrapure dans le circuit. Ce circuit comporte un purgeur (50) qui permet de temps à autre de purger le circuit d'eau ultrapure et de remplacer cette eau par une nouvelle charge d'eau ultrapure. Le circuit secondaire (51) de l'échangeur secondaire (47) reçoit le liquide chimique ultrapur (1) de manière à abaisser sa température d'une température de, par exemple, 30°C (« solution chimique 30°C » sur la figure 2) à une température d'environ 20°C (« solution chimique 20°C » sur la figure 2).

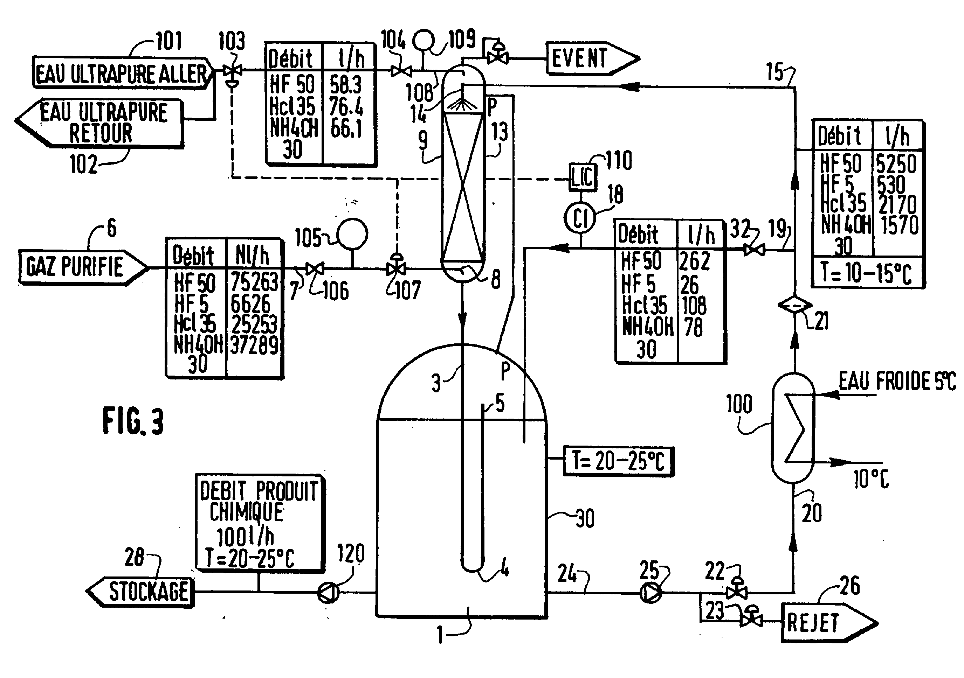

La figure 3 représente un schéma d'un procédé de dissolution en continu du gaz dans le liquide, procédé en continu qui permet de fabriquer en continu le produit chimique ultrapur. Sur cette figure, les mêmes éléments que ceux des figures précédentes portent les mêmes références.

Ce système de fabrication en continu présente quelques différences par rapport à celui décrit sur la figure 1. Une première différence est la présence d'un échangeur de chaleur (100) qui a été placé ici à l'extérieur de la cuve (30) à titre d'illustration d'un mode de réalisation différent du refroidissement de la solution et de son maintien à une température entre de préférence 20°C et 25°C. Cette différence en elle-même n'est pas liée au fait que la solution est produite de façon continue comme sur cette figure 3, ou de façon discontinue, comme sur la figure 1, mais les deux modes d'échange thermique pour le refroidissement de la solution et son maintien entre 20°C et 25°C permettent d'illustrer deux modes différents, soit par échange thermique dans le bain, soit par utilisation d'un échangeur placé à l'extérieur du bain, modes applicables dans les deux cas de production continue et discontinue.

La différence essentielle de cette figure 3 par rapport à l'appareil décrit sur la figure 1, est constituée par l'alimentation en continu en eau ultrapure (101 et 102), de manière à alimenter de façon continue en eau ultrapure la partie supérieure de la colonne (13) comportant les garnissages (9), lorsque les vannes (103, 104) sont ouvertes. Le gaz purifié (6) comme dans le cas de la figure 1, est amené au bas de la colonne par l'intermédiaire d'un débitmètre analogique (105) et deux vannes (106, 107) permettant de contrôler le débit de gaz purifié et délivrer la quantité voulue pour obtenir une solution ayant le titre désiré. (la canalisation (108) d'amené de l'eau ultrapure après la vanne (104) comporte également un débit mètre analogique (109) pour mesurer le débit d'eau ultrapure). Lorsque la concentration (ou le titre) de la solution qui circule en continu comme précédemment dans la colonne et qui est mesurée par l'appareil (18) est égale à la valeur programmée initialement, l'automate de commande (110) ferme alors les vannes (103, 107) de manière à stopper les alimentations en eau ultrapure et l'alimentation en gaz purifié, le produit stocké dans le réservoir (30) étant alors envoyé vers le stockage (28). En fonctionnement continu, les différents débits et pressions et modes de recirculation des produits dans le circuit sont tels que la concentration de produit est en permanence égale à la valeur souhaitée et que l'on peut ainsi en continu ou quasiment en continu, par l'intermédiaire de la pompe (120) obtenir un écoulement du produit chimique ultrapur vers le stockage (28). A titre d'information, et comme représenté sur la figure, on a indiqué les débits en litre par heure nécessaire des différents produits lorsque l'on veut produire différents gaz et notamment de l'acide fluorhydrique à 50% (HF 50) de l'acide fluorhydrique à 5% (HF 5) de l'acide chlorhydrique à 35% (HCL 35) et de l'ammoniaque à 30% (NH40H 30), les valeurs des différents débits sont indiquées sur la figures et le respect de ces différents débits permet d'obtenir les produits à la pureté voulue.

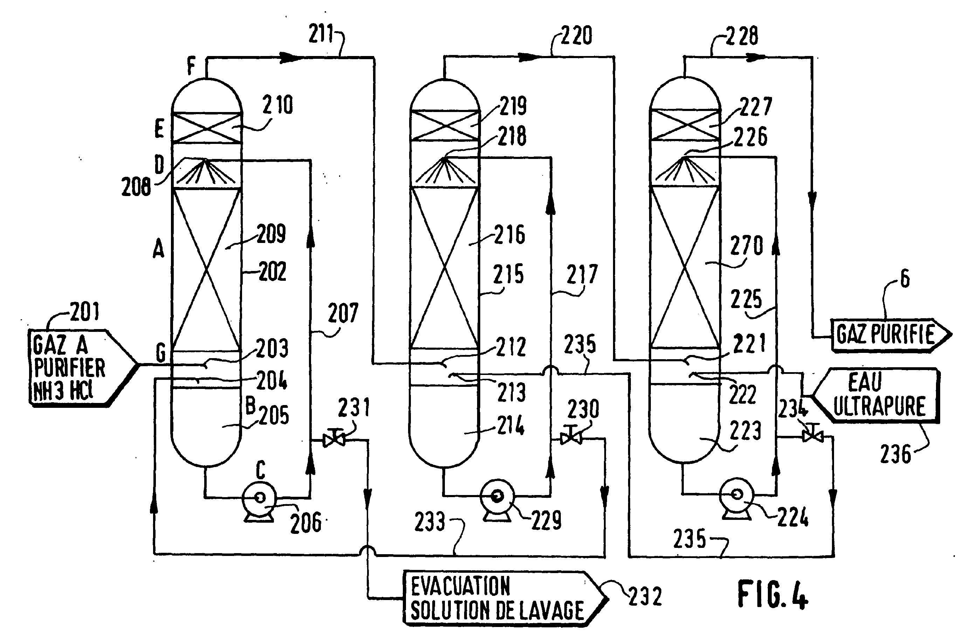

Sur la figure 4, est représenté schématiquement un système de purification de gaz chimique à purifier. Le gaz à purifier (210) est introduit par l'intermédiaire de la buse (203) dans la colonne de lavage (202) dont la cuve (205) comporte une solution d'eau saturée en gaz chimique et comportant les déchets par lavage du gaz. Le bas de la cuve est relié par l'intermédiaire d'une pompe (206) et d'une canalisation (207) à la partie supérieure de la colonne (202) ou le liquide recirculé par la pompe (206) est distribué par une douchette (208) à contre-courant du gaz à purifier injecté par la buse (203) et qui remonte dans les garnissages (209) où se produit l'échange matière entre le gaz et le liquide. En tête de colonne, c'est à dire la partie supérieure de la colonne (202) se trouve un dévisiculeur, de manière à filtrer un certain nombre d'impuretés qui subsisteraient encore dans le gaz et à provoquer une condensation de l'humidité qui se trouve dans celui-ci. Le gaz après ce premier étage de purification, est extrait par le sommet de la colonne à travers la canalisation (211) et envoyé dans la partie basse de la deuxième colonne (215) par l'intermédiaire de la buse (212) et une purification du même type que dans l'étage précédent, est effectuée à l'aide la recirculation du liquide (214) par l'intermédiaire de la pompe (229) et de la canalisation (217), renvoyé à contre-courant dans la douchette (218), pour aller au contact dans la colonne (215) sur les garnissages (216) du gaz qui monte dans cette colonne. Au sommet de cette colonne, on trouve également un dévisiculeur (19) et le gaz de pureté encore plus élevée est envoyé par la canalisation (220) dans la troisième colonne qui remplit la même fonction que les deux colonnes précédentes, c'est à dire que le gaz est injecté par la buse (221) à contre-courant du liquide circulé à partir de la cuve contenant le liquide (223) la pompe (224) la canalisation (225) et la douchette (226) dans les garnissages (270). De l'eau ultrapure est introduite par la buse (222) venant d'un réservoir d'eau ultrapure (236), cette eau étant envoyée dans la cuve (223). Le gaz totalement purifié traverse le dévisiculeur (227) par la canalisation (228), se retrouve sous la forme de gaz purifié (6) tel que décrit sur les figures précédentes. Sur cette figure 4, le liquide qui circule dans la troisième colonne, c'est à dire celle située plus à droite sur la figure 4, peut être envoyé grâce à la vanne (234) et la canalisation (235) dans la buse (213) qui alimente la cuve de la deuxième colonne (214) de manière à récupérer le liquide saturé de cette troisième colonne et l'envoyer dans la deuxième colonne où il sera recirculé à contre-courant du gaz. De la même manière, sur le circuit de recirculation du liquide dans la cuve (214) de la colonne (215) est connectée une vanne (230) de manière à pouvoir prélever ce liquide et l'envoyer via la canalisation (233) dans la buse (204) qui alimente elle-même en liquide la cuve (205) de la colonne (202). Ceci présente les avantages mentionnées ci-avant de rapidité et d'économie.

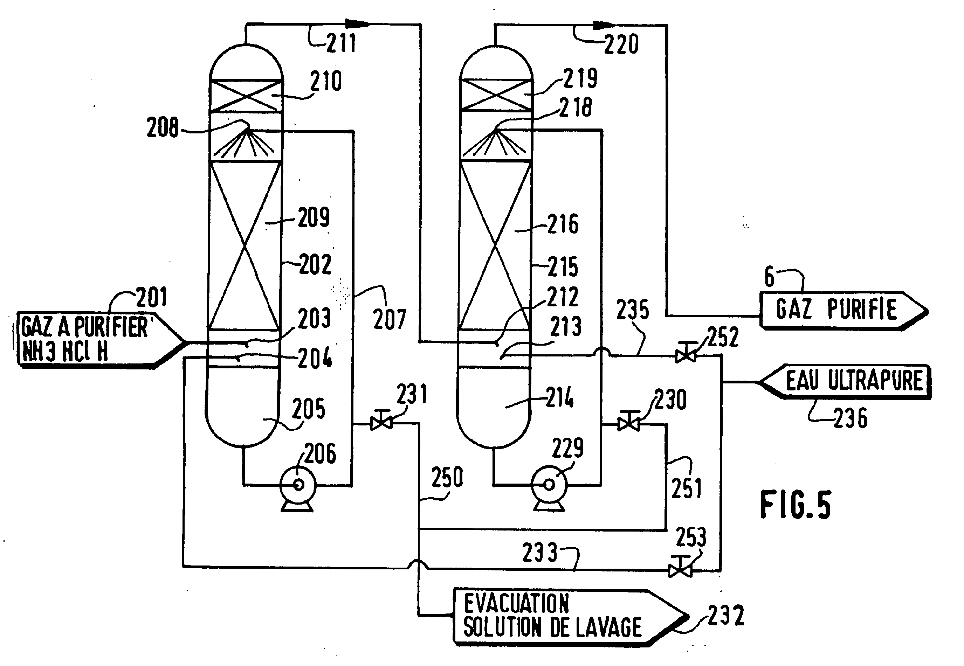

Sur la figure 5, les mêmes éléments que ceux des figures précédentes portent les mêmes références. Sur cette figure on réalise une purification de gaz grâce à deux colonnes seulement, la différence essentielle sur cette figure par rapport à la figure 4 étant que l'on alimente directement chacune des deux colonnes par de l'eau ultrapure (236) par l'intermédiaire respectivement des vannes (252) et de la canalisation (235)de manière à atteindre la buse (213) qui alimente la colonne (215) et d'autre part, via la vanne (253) la canalisation (233) qui alimente la buse (204) qui vient alimenter en liquide la cuve (205) de la colonne (202). Par ailleurs, les vannes (231 et 230) permettent respectivement par l'intermédiaire des canalisation (250 et 251) de procéder à l'évacuation de la solution de lavage vers (232) lorsque ceci est nécessaire, notamment quand il faut remplacer la solution de lavage saturée en impuretés et remplir à nouveau les cuves avec de l'eau ultrapure.

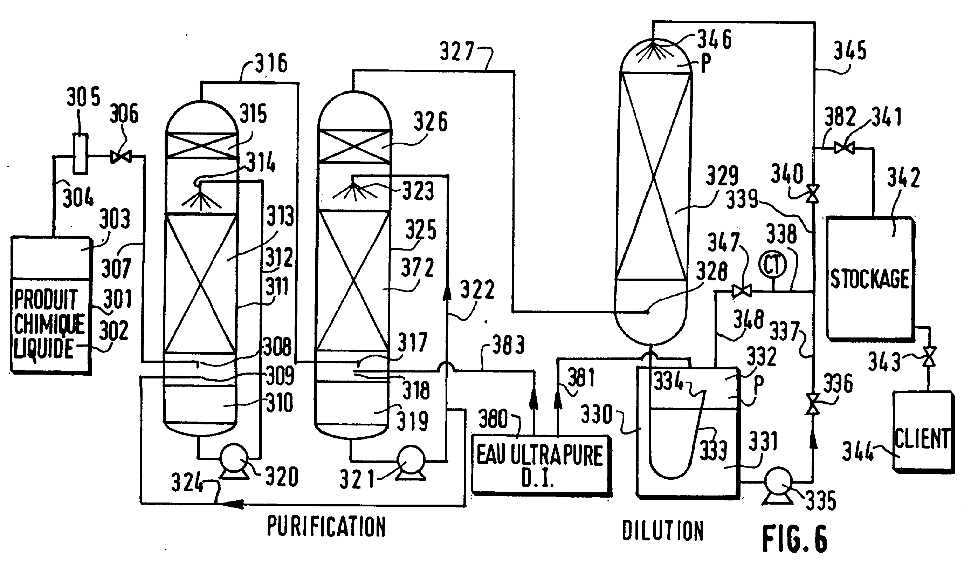

La figure 6 est une représentation schématique de l'ensemble de l'appareil selon l'invention comportant à la fois le système de purification et le système de dilution. Un conteneur (301) de produit chimique liquide (302) au-dessus duquel se trouve un ciel gazeux (303) du même produit chimique, est relié par la canalisation (304) le filtre (305) et la vanne (306) et la canalisation (307) à la buse (308) d'injection du gaz prélevé dans le ciel gazeux (303) du conteneur (301). Le gaz est alors injecté dans la première colonne de purification (311) comme décrit précédemment, ce gaz remontant à contre-courant dans les garnissages (313) du liquide qui vient de la cuve (310) et qui est circulé par la pompe (320) la canalisation (312) et la douchette (314). La cuve est elle-même alimenté en liquide (324) provenant par exemple du circuit de circulation de liquide de la deuxième colonne (325) (ou alternativement comme sur la figure 4, on peut prévoir une alimentation directe en eau ultrapure désionisée). Le gaz après cette première étape de purification dans la colonne (311) traverse le dévisiculeur (315) puis par la canalisation (316) est amené à la base de la colonne (325) dans la buse (317) dans laquelle il circule à contre-courant du liquide de la cuve (319) circulé dans la pompe (321) à la canalisation (322) et la douchette (323) à travers les garnissages (372) de cette colonne (325). Le gaz après cette deuxième étape de purification, donc ayant atteint le degré de pureté voulu, traverse le dévisiculeur (326) puis par la canalisation (327) arrive dans la buse (328) sous forme de gaz chimique ultrapur. Dans la colonne (329) ce gaz chimique ultrapur est injecté à la base de la colonne à contre-courant du liquide recirculé par l'intermédiaire de la douchette (346) à travers les garnissages (329) de manière à réaliser une solution de produit chimique liquide ayant la concentration voulue. Le liquide enrichi en gaz ultrapur s'écoule dans la canalisation du type capillaire (333) et par gravité remplit progressivement le récipient (330) par débordement par l'ouverture (334). Au dessus, du liquide (331) contenu dans ce récipient (330), se trouve un ciel gazeux (132) de préférence d'azote ultrapur de pureté électronique tandis que un réservoir d'eau ultrapure désionisée (380) peut alimenter par l'intermédiaire de la canalisation (381) lorsque cela est nécessaire le récipient (330) (voir description des figures précédentes concernant le fonctionnement). A la base du récipient (330) se trouve une pompe de circulation (335) qui fait circuler le liquide progressivement enrichi en gaz par l'intermédiaire de la vanne (336) de la canalisation (337) de la canalisation (339), la vanne (340), la canalisation (345) puis la douchette (346). La canalisation (337) comprend une jonction au niveau des canalisations (339 et 337), cette jonction (338) permettant de faire la mesure du titre par l'intermédiaire du dispositif CT sur la figure de manière à continuellement vérifier le titre de la solution jusqu'à ce que le titre voulu soit atteint. La solution ainsi recirculée, pour mesurer son titre sans contact physique, est envoyée par l'intermédiaire de la vanne (347) dans le récipient (330). On retrouve également après la vanne (340) une canalisation (382) qui permet par l'intermédiaire de la vanne (341) de stocker le produit chimique au titre voulu dans la stockage (342) celui-ci étant relié par l'intermédiaire de la vanne (343) au lieu d'utilisation ou « point of use » du client (344). La réserve d'eau ultrapure désionisée (380) est également reliée par l'intermédiaire de la canalisation (383) à la buse (318) qui permet d'injecter cette eau dans la cuve (319) de la colonne (325). Il existe également une canalisation (324) de prélèvement et recyclage de la solution enrichie en impuretés lorsque cela est nécessaire vers la cuve de la première colonne de purification (310).

Exemple 1 : Cet exemple est représenté sur les figures 1 et 2. Il s'agit d'une colonne verticale remplie d'un garnissage de nature à augmenter, au maximum, l'aire interfaciale gaz/liquide comme des anneaux de Rashig, ou cloisonnés de type « Pall », ou des billes, ou des ensellements. Le liquide de dissolution est injecté au sommet de la colonne et le gaz purifié à dissoudre à la partie inférieure. Le liquide s'écoule vers le réacteur par un tube en U dont la branche libre débouche au dessus de la surface du liquide.

Ce tube en U joue le rôle d'une soupape hydraulique qui oblige le gaz à dissoudre, à passer dans les garnissages de la colonne.

Une pompe de circulation reprend le liquide et le réinjecte au sommet de la colonne d'absorption à un débit tel que l'échauffement dû à la dissolution du gaz reste compatible avec la concentration finale du produit chimique à obtenir. La boucle de recirculation est équipée d'un filtre. Le ciel gazeux du réacteur est relié au sommet de la colonne par une canalisation pour y égaliser les pressions. Le sommet de la colonne est relié par une soupape de sûreté à un évent.

La colonne est réalisée en matière plastique résistante à la corrosion et compatible avec la haute pureté recherchée pour les produits chimiques: il en est de même pour le garnissage. Un échangeur de chaleur en matière plastique est situé dans le récipient qui reçoit le produit chimique sous la colonne ou au refoulement de la pompe assurant l'alimentation de la colonne, dans ce cas, une partie importante supérieure à 70% du liquide devra être renvoyée directement au récipient qui collecte le produit chimique. L'échangeur plastique secondaire est alimenté par de l'eau désionisée refroidie par de l'eau glycolée dans un échangeur (primaire) en acier inoxydable suivant la figure 2. L'eau désionisée est continuellement remplacée par une alimentation en aval de la pompe de circulation de la boucle et le soutirage est ajusté de manière à avoir une contamination ionique minimale de la boucle: on évite ainsi en cas de fuite sur l'échangeur plastique la contamination du produit chimique.

Un filtre est disposé au refoulement de la pompe à l'aval de l'échangeur. Sur le circuit de retour au récipient collecteur, est monté l'analyseur de process (et son automate) qui mesure la concentration du produit chimique.

Exemple 2 : Cet exemple est représenté sur la figure 3. La mise en oeuvre préférentielle de ce procédé de dissolution continue comporte:
une colonne d'absorption garnie, un récipient tampon collecteur sous la colonne, et un circuit de refroidissement qui comprend une pompe, un échangeur de chaleur et un filtre.

En outre, dans cet exemple, on trouve un circuit direct de retour au récipient tampon qui peut prendre, par exemple, de 2 à 10% du débit du circuit de refroidissement. Le circuit comporte une vanne de réglage de débit, un transmetteur de concentration, et un régulateur (type PID) de concentration asservissant la vanne de régulation du circuit d'alimentation en gaz purifié, et un circuit d'alimentation de la colonne d'absorption dans lequel circule de 90% à 98% du débit du circuit de refroidissement, une pompe de dépotage qui extrait le produit fini du récipient tampon et l'envoie vers les cuves de stockage, un circuit d'alimentation en gaz purifié comprenant un débitmètre transmetteur, une vanne de régulation asservie à l'analyseur, un circuit d'alimentation en eau ultrapure comportant une vanne de réglage de débit et un débitmètre transmetteur.

Dans une variante, l'échangeur peut être installé directement dans le récipient tampon sous la colonne d'absorption, la forte chaleur de dissolution des gaz tels que HF, HC1 ou NH3 conduisant à faire fonctionner la colonne d'absorption avec un débit élevé de solution de manière à évacuer les calories sans élévation exagérée de la température ce qui pourrait avoir des conséquences pour le titre de la solution produite. La figure 3 donne les débits pour obtenir 100 litres par heure de solution pour par exemple de l'acide fluorhydrique à 50% (HF 50), de l'acide fluorhydrique à 5% (HF 5), de l'acide chlorhydrique à 35% (HCl 35), de l'ammoniaque NH40H à 30% (NH40H 30).

Exemple 3 : Deux variantes de cet exemple sont représentées sur les figures 4 et 5. Le dévésiculeur en tête de colonne comme décrit dans le brevet US 5,496,778, ayant une efficacité limitée, différentes solutions sont apportées par l'invention.

Pour améliorer encore la pureté plutôt que d'augmenter le volume de la colonne, selon l'invention, on met en oeuvre une deuxième colonne en série. La solution saturée de lavage aura un niveau de pureté plus bas que celui de la première. L'aérosol inévitablement entraîné sera beaucoup moins concentré en impuretés métalliques (d'un facteur 100) environ que sur la première colonne, la solution produite par dissolution du gaz après la deuxième colonne sera donc elle-même beaucoup plus pure que celle produite par un dispositif de purification à une seule colonne. Un système à une colonne permet d'obtenir un niveau d'impureté métallique de l'ordre de 10 ppb pour chaque cation : avec un dispositif selon l'invention à au moins deux colonnes en série, on peut atteindre une pureté meilleure que 100 ppt. Chacune des colonnes de lavage comprend de préférence des garnissages, un réservoir collectant la solution de lavage, une pompe renvoyant la solution de lavage jusqu'au sommet de la colonne, une buse de pulvérisation ou tout autre dispositif de répartition de la solution de lavage, un dévisiculeur situé au-dessus de l'arrivée de la solution de lavage, une sortie de gaz purifié au point le plus haut de la colonne, une entrée de gaz à purifier, située en dessous du garnissage de la colonne, une arrivée d'eau désionisée de haute pureté, une vanne d'évacuation de la solution de lavage usée.

La solution de lavage usée peut être évacuée soit au niveau de chaque colonne (fig. 4), et il en résulte alors une perte de produit chimique; il est préférable que l'eau désionisée soit introduite dans la dernière colonne (la plus en aval dans le procédé) et que la solution de lavage circule de colonne en colonne à contre-courant du gaz à purifier (fig. 5).

Il peut être utile pour le contrôle du procédé d'installer dans le récipient qui collecte la solution de lavage, un échangeur refroidi par de l'eau froide.

## Revendications

1. Procédé pour la réalisation de produit chimique liquide de haute pureté utilisable dans l'industrie micro-électronique, **caractérisé en ce que** l'on prend un gaz chimique choisi parmi l'ammoniaque, l'acide chlorhydrique et l'acide fluorhydrique, qu'on le purifie successivement sur deux colonnes de purification par passage à contre-courant d'une solution d'eau désionisée initialement de haute pureté et qui se charge progressivement en impureté tandis que le gaz sort de la deuxième colonne de purification avec une haute pureté, notamment un faible contenu en éléments métalliques, **en ce que** le gaz purifié est ensuite dissous dans une colonne garnie dans laquelle on recircule en continu le liquide recueilli au bas de la colonne et qui s'enrichit en gaz chimique purifié et **en ce que** le produit chimique de haute pureté est ensuite distribué lorsque la concentration en gaz dissous a été atteinte , **en ce que** le volume du réservoir situé sous chaque colonne de purification est compris entre 2 et 5 fois la quantité de liquide que peuvent retenir les garnissages de la colonne, de manière à limiter les quantités de gaz perdues par dissolution dans les colonnes de lavage, et **en ce que** la purge de solution de lavage usée s'effectue d'une colonne dans l'autre à contre courant du gaz de manière à limiter les pertes de gaz dissous dans la solution de lavage.

2. Procédé selon la revendication 1, **caractérisé en ce que** l'on dispose un échangeur de chaleur sur le circuit de circulation de produit chimique, une partie importante du liquide refroidi, supérieur à 70% en volume, alimentant la colonne de dissolution, l'autre partie étant recyclée directement vers le récipient collectant le produit chimique.

3. Procédé selon la revendication 2, **caractérisé en ce que** l'échangeur est alimenté en eau désionisée froide régulièrement renouvelée.

4. Procédé selon la revendication 3, **caractérisé en ce que** l'eau désionisée est refroidie par de l'eau glycolée dans un échangeur à plaque ou tubulaire.

5. Procédé selon l'une des revendications précédentes, **caractérisé en ce que** la dissolution du gaz chimique dans l'eau, est continue, la chaleur de la réaction étant régulièrement évacuée de manière à maintenir la température du produit entre environ 20°C et 25°C et le rapport des débits de solutions recyclée et soutirée étant contrôlé de manière à maintenir la température du produit dans cette gamme.

6. Procédé selon la revendication 5, **caractérisé en ce que** le produit chimique est de l'acide fluorhydrique à 50% avec un rapport de débit compris entre 80 et 260.

7. Procédé selon la revendication 5, **caractérisé en ce que** le produit chimique est de l'acide fluorhydrique à 5% avec un rapport de débit compris entre 3 et 10.

8. Procédé selon la revendication 5, **caractérisé en ce que** le produit chimique est de l'acide, chlorhydrique à 35% avec un rapport de débit compris entre 20 et 65.

9. Procédé selon la revendication 5, **caractérisé en ce que** le produit chimique est de l' ammoniaque à 30% avec un rapport de débit compris entre 18 et 60.

10. Procédé selon l'une des revendication 1 à 9 fonctionnant en continu, **caractérisé en ce que** l'apport continu d'eau est régulé par analyse du titre de la solution de produit chimique, l'injection d'eau étant stoppée lorsque le titre est atteint.

11. Procédé selon l'une des revendications 1 à 10, **caractérisé en ce que** la purification du gaz est réalisée à l'aide d'au moins deux colonnes successives, le nombre de colonnes dépendant du niveau de pureté souhaité, le gaz à purifier sortant du haut d'une colonne étant introduit à la base de l'autre avant d'être dissout dans l'eau désionisée de haute pureté.

12. Procédé selon l'une des revendications 1 à 11, **caractérisé en ce que** le débit de purge de la solution de lavage usée qui peut être soutiré de manière continue ou séquentielle de la cuve de chaque colonne, est de l'ordre de 0.1% à 5% du débit de lavage.

13. Procédé selon l'une des revendications 1 à 12, **caractérisé en ce que** la solution de lavage est refroidie par une échangeur de chaleur.

## Claims

1. Process for producing a high-purity liquid chemical which can be used in the microelectronics industry, **characterized in that** the process starts with a chemical gas chosen from aqueous ammonia, hydrochloric acid and hydrofluoric acid, which is successively purified over two purification columns by passing, as a countercurrent, a solution of initially deionized high-purity water which gradually becomes loaded with impurity, while the gas leaves the second purification column with a high purity, especially a low content of metallic elements, **in that** the purified gas is subsequently dissolved in a packed column into which the liquid which is collected at the bottom of the column and which is enriched with purified chemical gas is continuously recirculated and **in that** the high-purity chemical is subsequently distributed when the concentration of dissolved gas has been reached, **in that** the volume of the container located under each purification column is between 2 and 5 times the quantity of liquid which the packings in the column can retain, so as to limit the quantities of gas lost by dissolving in the scrubbing columns, and **in that** the spent scrubbing solution is purged from one column to the other as a countercurrent to the gas so as to limit the losses of gas dissolved in the scrubbing solution.

2. Process according to Claim 1, **characterized in that** a heat exchanger is placed in the circuit for circulating the chemical, a major portion of the cooled liquid, greater than 70% by volume, feeding into the dissolution column, the other portion being recycled directly into the container which collects the chemical.

3. Process according to Claim 2, **characterized in that** the exchanger is fed with regularly replenished cold deionized water.

4. Process according to Claim 3, **characterized in that** the deionized water is cooled by glycol water in a plate-type or tube-type exchanger.

5. Process according to one of the preceding claims, **characterized in that** the chemical gas is dissolved in the water continuously, the heat of reaction being regularly removed so as to keep the temperature of the product between about 20°C and 25°C and the ratio of the flow rates of solutions which are recycled and drawn off being controlled so as to keep the temperature of the product within this same range

6. Process according to Claim 5, **characterized in that** the chemical is 50% hydrofluoric acid with a flow-rate ratio of between 80 and 260.

7. Process according to Claim 5, **characterized in that** the chemical is 5% hydrofluoric acid with a flow-rate ratio of between 3 and 10.

8. Process according to Claim 5, **characterized in that** the chemical is 35% hydrochloric acid with a flow-rate ratio of between 20 and 65.

9. Process according to Claim 5, **characterized in that** the chemical is 30% aqueous ammonia with a flow-rate ratio of between 18 and 60.

10. Process according to one of Claims 1 to 9 operating continuously, **characterized in that** the continuous supply of water is regulated by analysing the titre of the solution of chemical, the water injection being stopped when the titre is obtained.

11. Process according to one of Claims 1 to 10, **characterized in that** the gas is purified using at least two successive columns, the number of columns depending on the desired level of purity, the gas to be purified leaving the top of one column being introduced into the bottom of the other, before being dissolved in the high-purity deionized water.

12. Process according to one of Claims 1 to 11, **characterized in that** the rate of purging of the spent scrubbing solution which may be drawn off continuously or sequentially from the collector of each column is about 0.1% to 5% of the scrubbing rate.

13. Process according to one of Claims 1 to 12, **characterized in that** the scrubbing solution is cooled by a heat exchanger.

## Patentansprüche

1. Verfahren für die Herstellung eines flüssigen chemischen Produkts hoher Reinheit, das in der Mikroelektronikindustrie verwendet werden kann, **dadurch gekennzeichnet, dass** ein chemisches Gas verwendet wird, das ausgewählt wird aus Ammoniumhydroxid, Salzsäure und Flusssäure, dass es nacheinander im Gegenstromverfahren in zwei Waschkolonnen mit einer Lösung aus vollentsalztem Wasser gereinigt wird, die zu Beginn eine hohe Reinheit aufweist und allmählich mit Verunreinigungen belastet wird, während das Gas aus der zweiten Waschkolonne mit einer hohen Reinheit austritt, insbesondere einem geringen Gehalt an metallischen Elementen, **dadurch**, dass das gereinigte Gas anschließend in einer Füllkörperkolonne gelöst wird, in der die Flüssigkeit, die im unteren Teil der Kolonne aufgefangen wird, kontinuierlich wieder zugeführt wird, in der sich das gereinigte chemische Gas anreichert, und **dadurch**, dass das chemische Produkt hoher Reinheit anschließend verteilt wird, wenn der Gehalt an gelöstem Gas erreicht wurde, **dadurch**, dass der Rauminhalt des Behälters, der sich unter jeder Waschkolonne befindet, zwischen dem Zweifachen und Fünffachen der Flüssigkeitsmenge beträgt, die die Packungen der Kolonne halten können, um die Gasmengen zu beschränken, die durch das Inlösunggehen in den Waschkolonnen verloren gehen, und **dadurch**, dass das Ablassen der verbrauchten Waschlösung von einer Kolonne in die andere Kolonne im Gegenstrom zum Gas erfolgt, um die Verluste des Gases zu beschränken, das in der Waschlösung gelöst ist.

2. Verfahren nach Anspruch 1, **dadurch gekennzeichnet, dass** in dem Kreislauf des chemischen Produkts ein Wärmetauscher angeordnet wird, wobei ein erheblicher Teil der abgekühlten Flüssigkeit, über 70 Volumenprozent, der Lösungskolonne zugeführt wird, wobei der andere Teil unmittelbar zu dem Behälter zurückgeführt wird, in dem das chemische Produkt aufgefangen wird.

3. Verfahren nach Anspruch 2, **dadurch gekennzeichnet, dass** dem Wärmetauscher kaltes vollentsalztes Wasser zugeführt wird, das regelmäßig erneuert wird.

4. Verfahren nach Anspruch 3, **dadurch gekennzeichnet, dass** das vollentsalzte Wasser durch ein GlykolWasser-Gemisch in einem Platten- oder Röhrenwärmetauscher abgekühlt wird.

5. Verfahren nach einem der vorhergehenden Ansprüche, **dadurch gekennzeichnet, dass** das chemische Gas kontinuierlich in dem Wasser gelöst wird, wobei die Reaktionswärme regelmäßig abgeführt wird, um die Temperatur des Produkts zwischen etwa 20 °C und 25 °C zu halten und wobei das Verhältnis aus dem Durchfluss der zurückgeführten Lösung und der entnommenen Lösung geregelt wird, um die Temperatur des Produkts in diesem Bereich zu halten.

6. Verfahren nach Anspruch 5, **dadurch gekennzeichnet, dass** das chemische Produkt 50 %ige Flusssäure mit einem Durchflussverhältnis zwischen 80 und 260 ist.

7. Verfahren nach Anspruch 5, **dadurch gekennzeichnet, dass** das chemische Produkt 5 %ige Flusssäure mit einem Durchflussverhältnis zwischen 3 und 10 ist.

8. Verfahren nach Anspruch 5, **dadurch gekennzeichnet, dass** das chemische Produkt 35 %ige Salzsäure mit einem Durchflussverhältnis zwischen 20 und 65 ist.

9. Verfahren nach Anspruch 5, **dadurch gekennzeichnet, dass** das chemische Produkt 30 %iges Ammoniumhydroxid mit einem Durchflussverhältnis zwischen 18 und 60 ist.

10. Verfahren nach einem der Ansprüche 1 bis 9 im kontinuierlichen Betrieb, **dadurch gekennzeichnet, dass** die ununterbrochene Wasserzufuhr durch Analyse des Titers der Lösung des chemischen Produkts eingestellt wird, wobei die Zuführung von Wasser gestoppt wird, wenn der Titer erreicht ist.

11. Verfahren nach einem der Ansprüche 1 bis 10, **dadurch gekennzeichnet, dass** die Gaswäsche mithilfe von mindestens zwei aufeinander folgenden Kolonnen erfolgt, wobei die Anzahl der Kolonnen von dem gewünschten Reinheitsgrad abhängt, wobei das zu reinigende Gas, das oben aus einer Kolonne austritt, im unteren Teil der anderen eingeleitet wird, bevor es in vollentsalztem Wasser hoher Reinheit gelöst wird.

12. Verfahren nach einem der Ansprüche 1 bis 11, **dadurch gekennzeichnet, dass** der Durchfluss beim Ablassen der verbrauchten Waschlösung, die kontinuierlich oder sequenziell aus der Wanne jeder Kolonne entnommen werden kann, in der Größenordnung von 0,1 % bis 5 % des Durchflusses beim Waschen liegt.

13. Verfahren nach einem der Ansprüche 1 bis 12, **dadurch gekennzeichnet, dass** die Waschlösung durch einen Wärmetauscher abgekühlt wird.
